# EUROPEAN PATENT APPLICATION

(11) **EP 2 894 049 A1**
(43) Date of publication of application: **15.07.2015**
(21) Application number: 14004432.2
(22) Date of filing: 29.12.2014
(51) Int. Cl.: B60B 33/00, B60B 30/02, B60B 30/10, B66F 7/24

(54) **Trolley for rolling disk bodies**

(30) Priority: 31.12.2013 IT TO20131091
(71) Applicant: Ideal Truck, 28066 Galliate (NO) (IT)
(72) Inventor: Borrini, Marcello, 28066 Galliate (NO) (IT)
(74) Representative: Aprà, Mario

(57) **Abstract**

A trolley for a rolling disk body (2) comprising a support (6) for maintaining the rolling body (2) raised off the ground against the action of the weight of the rolling body (2), and adapted to come into contact with a rolling surface (S) of the rolling body, a first and a second side (3, 4) opposed in transverse direction to the support (6) and spaced apart to define a loading opening (8) for the rolling body (2) and a seat (7) defined between the support (6) and said first and second side (3, 4) to house the rolling body (2) in a position such that lateral faces (F) of the rolling body (2) are facing a respective side (3, 4), the trolley (1) comprising a transverse edge (15) adapted to come into contact with the rolling surface (S), while the rolling body (2) enters the seat (7) and having a distance from the ground that is null or such that the rolling body (2) can be rolled onto the support (6) by pushing,wherein said support (6) is movable between a loading/unloading position in which said rolling body is rolled onto/off said trolley and a storage position in which said rolling body (2) is housed stably in said seat (7), wherein said transverse edge (15) is movable with said support (6) between a lowered position for loading/unloading of said rolling body (2) and a raised position and comprising a braking system (19; 20) to block said trolley. The braking system comprises a block (21; 43) connected to said support (6) by means of a mechanism and movable to come into contact with the ground when said support (6) is in the loading/unloading position.

## Description

The present invention relates to a trolley for loading/unloading and/or handling and/or storing rolling disk bodies.

A rolling disk body is any body having at least one circular section coming into contact with the ground to roll and a diameter of such a circular section greater than the maximum width of the body measured parallel to the revolution axis during the rolling movement. Examples of rolling disk bodies are wheels of a landing gear of an aircraft, reels for transporting metallic cables, in particular electrical cables, and/or other large sized wheels, such as those for earth-moving machines, trucks and agricultural machines. Such wheels have a minimum diameter greater than 300 millimeters, in particular from 600mm to 2500mm and/or a minimum weight greater than 40kg.

In the particular case of a rolling disk body which does not remain spontaneously in rolling position, as most of the wheels of an aircraft landing gear, the respective storage is random. In such a condition, a rolling disk body having high weight is handled with difficulty. Therefore, the replacement time is relatively long. Furthermore, the wheels occupy a relatively large space inside repair sheds and may be damaged because of non-optimal resting positions which are maintained for excessively long time. For example, one wheel is rested against a stable wall and the others are rested on one another.

When the rolling disk bodies more easily maintain the rolling position, as in the case of cable reels, forklift trucks are often required to move them and only a very limited number of movements can be controlled directly by hand by the personnel and in narrow spaces.

It is the object of the present invention to make a trolley which simplifies the movement of rolling disk bodies also by hand by the logistic platform and/or maintenance service personnel, e.g. in airports.

The object of the present invention is reached by a trolley according to claim 1.

The invention will now be described with reference to the accompanying drawings which illustrate a non-limitative embodiment thereof, in which:
- figure 1 is a perspective view of a trolley according to the present invention and of a rolling disk body to be loaded on the trolley;
- figure 2 is a perspective view of a rolling disk body loaded on the trolley in figure 1;
- figures 2a, 2b, 2c are respective details of the trolley in figure 2;
- figure 3 is a side view of a trolley in figure 1 shown with an operator and figure 3a is a detail of figure 3;
- figure 4 is a front view of the trolley in figure 3;
- figure 5 is a side view of the trolley in figure 1 in a loading/unloading position of an aircraft wheel and figure 5a is a respective detail;
- figure 6 is a perspective view of figure 2 from another angle;
- figure 7 is a perspective view of the trolley in figure 1 with a reel for a cable aboard;
- figure 8 is a perspective view of a second embodiment of the trolley in figure 1;
- figure 9 and figure 10 are respective side and front views of figure 8; and
- figures 11 and 12 with the respective details refer to two different operative configurations of a trolley according to the present invention.

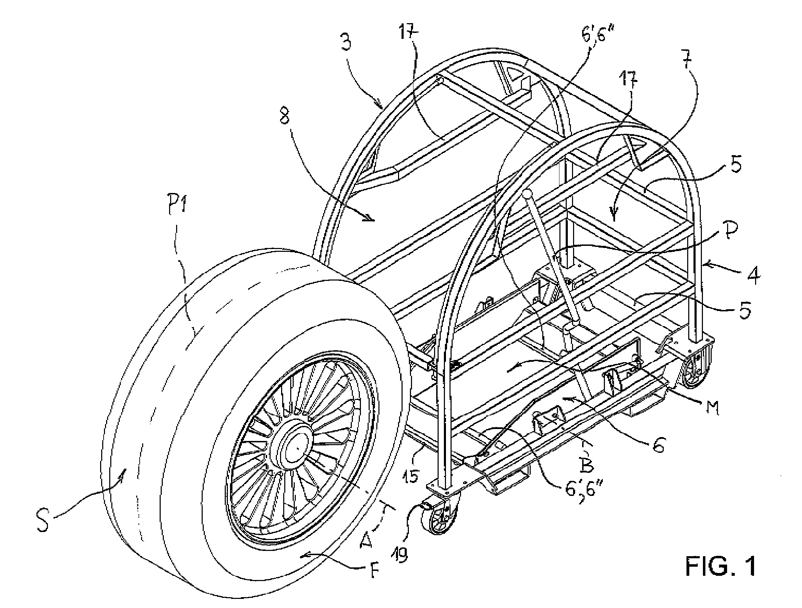

In figure 1, reference numeral 1 indicates, as a whole, a trolley for a rolling disk body, e.g. an aircraft wheel 2. The trolley 1 comprises a first and a second side 3, 4, facing each other, one or more crosspieces 5 for rigidly connecting the sides 3, 4 to each other and a support 6 arranged in a bottom zone of the trolley between the sides 3, 4. Furthermore, the support 6 comes into contact with a rolling surface S of the wheel 2 when the latter is aboard the trolley. In particular, the support 6 delimits a cavity M into which a lower portion of the wheel 2 falls by gravity and is stably housed when aboard the trolley 1. For example, the cavity M is delimited by two opposite and distanced bars or walls 6'. Preferably, the bars or walls 6' are elongated parallel to a revolution axis A of the wheel 2.

The support 6, the crosspieces 5 and the sides 3, 4 define a seat 7 for housing the wheel 2 in such a position that the axis A is substantially parallel to the ground when the wheel 2 is housed in the seat 7. Furthermore, the seat 7 has an opening 8 through which the wheel 2 is loaded and unloaded onto and from the trolley 1.

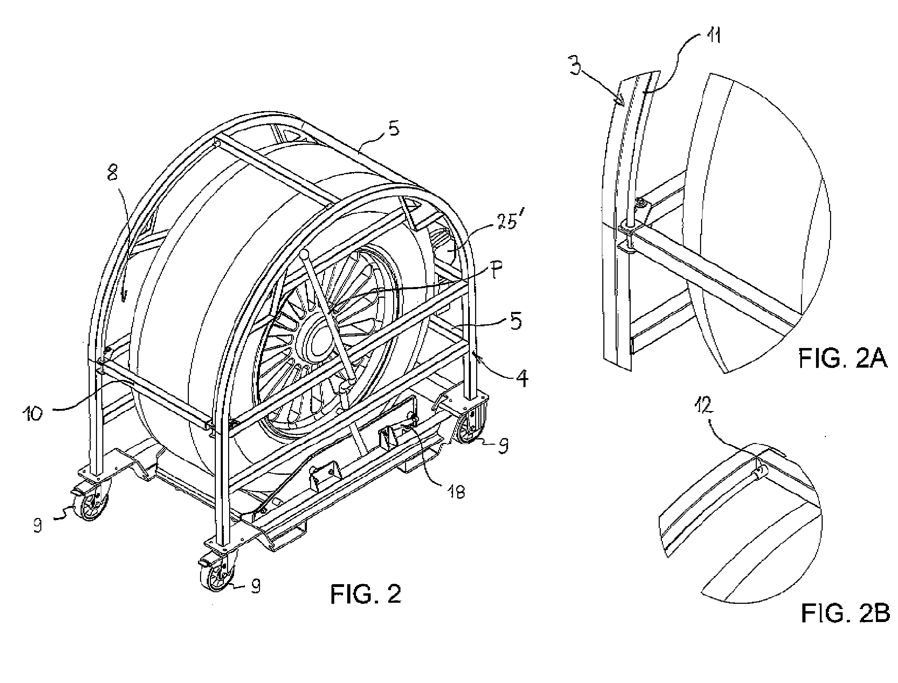

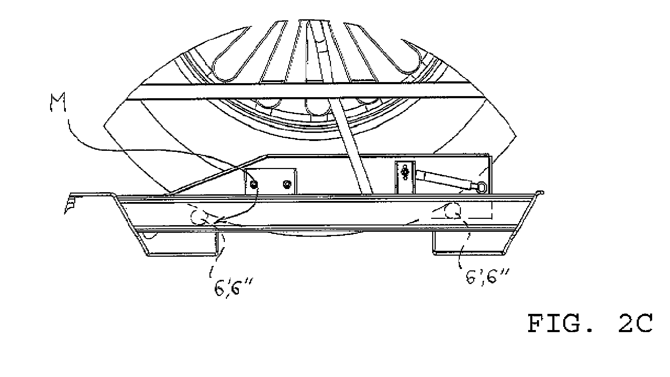

When the wheel 2 is aboard the trolley 1 (figure 2), the wheel 2 may be transported by an operator O, who can either push or pull the trolley 1 by hand. Preferably, for this purpose, the trolley 1 comprises a plurality of wheels 9, of which either at least one or all have a pivoting revolution axis to improve handling of the trolley in narrow spaces.

Preferably, the trolley 1 comprises a closure 10 for locking the wheel 2 in the seat 7, which closure is movable between a locking position (shown in figure 2), in which the seat 7 is closed and prevents the exiting of the wheel 2 through the opening 8, and a loading/unloading position, in which the wheel 2 may cross the opening 8 for loading/unloading.

According to a preferred embodiment of the present invention, the closure 10 may be configured to maintain the locking position by gravity against a locator and may be retained in the loading/unloading position by means of a specific stop 12. In this manner, the closure 10 moves downwards from the loading/unloading position to the locking position so as to be maneuvered with greater ease by an operator O and allow the trolley 1 to ensure safe transportation even on slanted ramps avoiding the exiting of the wheel 2. Advantageously, the closure 10 is guided by means of specific curved guides 11 and may comprise an elongated element or bar having an axis parallel to the one of the crosspieces 5.

The trolley 1 comprises a pair of slots 13 for inserting respective arms of a fork and making the trolley 1 easily transportable by means of a forklift truck in the bottom zone of the sides 3, 4 which is adjacent to the wheels 9. The slots 13 are arranged under the support 6 so that the arms of the fork, when inserted in the respective slots 13, do not interfere with the wheel 2 when the latter is aboard the trolley 1.

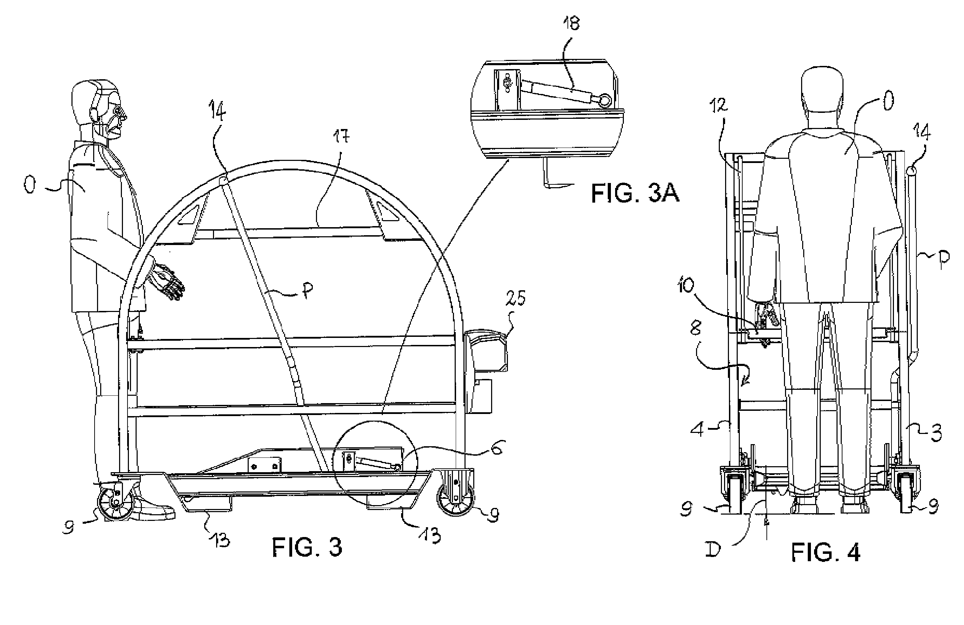

The support 6 is preferably movable and figure 3 shows a storage position of the support 6. In particular, the support 6 is connected to the sides 3, 4 by means of an advantageously articulated and/or lever-shaped mechanism to promote the loading/unloading of the wheel to/from the trolley 1. According to the embodiment shown in figure 3, the support 6 can be handled with a light pressure of a foot and/or by hand by means of an extension P having a grip or handle 14 arranged frontally like the opening 8. In the storage position, the wheel 2 is aboard the trolley 1 and the closure 10 may be lowered. In particular, in the embodiment shown in figures 3 and 4, the closure 10 and the support 6 are movable in reciprocally independent manner.

In particular, the support 6 comprises a transverse edge 15 arranged frontally, which in the storage position is spaced apart from the ground by a distance D so that the trolley 1 can be moved by pushing by the operator 0 at least on a concrete or asphalt pavement. Such a pavement is commonly used in industrial buildings, on logistic platforms and/or in airport areas used for maintenance. Furthermore, the edge 15 is arranged so as to come into contact with the wheel 2, while the latter is loaded by rolling into the seat 7.

In the storage position, when the wheel 2 is aboard the trolley 1, the weight of the latter prevalently loads the support 6. Furthermore, the wheel 2 can rest on a crosspiece 5 and laterally on the sides 3, 4. For such a purpose, each side 3, 4 may comprise a shaped rib 17 protruding towards the seat 7 and arranged in an upper zone of the trolley 1 on the opposite side with respect to the bottom zone and the wheels 9. The shaped ribs 17, possibly adjustable to adapt to the width of the wheel 2, face respective faces F of the wheel 2 and come into contact with either one or both the faces F to keep the wheel 2 in a substantially vertical position, i.e. with the axis A substantially parallel to the ground.

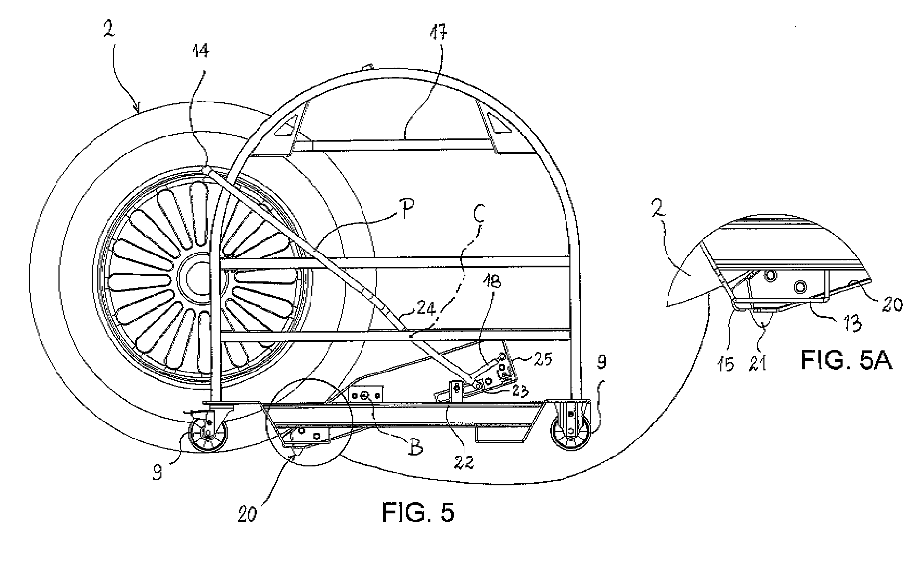

Figure 5 shows a trolley 1 with the support 6 in a loading/unloading position. In such a position, the edge 15 is lowered towards the ground with respect to the storage position so that the wheel 2 can be rolled up onto the support 6 pushed by the operator O. Preferably, the support 6 is tilting and the respective movement between the loading/unloading position and the storage position is controlled by the operator O by means of the grip 14 or simply by the pressure of a foot. Furthermore, such a movement may be assisted by a compensating spring 18 which opposes the reaching of the storage position and, while the support 6 reaches the loading/unloading position, applies a load which promotes the unloading of the wheel 2. In this manner, it is possible to prevent reaching the storage position too abruptly and help the operator O to take the support 6 to the unloading position when the wheel 2 is aboard the trolley 1. Preferably, the compensating spring 18 is a gas spring. In order to simplify the loading operation of the wheel 2 further, the trolley 1 comprises a brake 19 which is activated by the operator O before the wheel 2 is pushed onto the support 6. For example, the brake 19 locks one or more wheels 9.

According to a preferred embodiment of the present invention, the trolley 1 comprises a further brake 20 operated by means of the support 6 preferably in independent manner from the brake 19. Advantageously, the brake 20 comprises at least one block 21 made of friction material loaded onto the ground by the weight of the wheel 2 when the support 6 is in the loading/unloading position (figure 5). In particular, the block 21 is arranged on a front end of the support 6 under the edge 15. Advantageously, the compensating spring 18 is configured to apply a load onto the block 21 when the support 6 is in the loading/unloading position so as to make the action by friction of the brake 20 on the terrain more effective.

Furthermore, as shown in figure 5, in an embodiment, the movement of the support 6 is a tilting movement about a hinge axis B and the extension P activates a mechanism comprising a guide 22 carried by the support 6. In particular, the extension P comprises, at an end thereof opposite to the grip 14, an appendix 23 slidingly coupled to the guide 22 and a hinge portion 24 hinged to a fixed axis C defined on the side 3, 4. Preferably, the guide 22 is on the opposite side of the edge 15 to the hinge axis B, e.g. on an end 25 of the support 6 opposite to the edge 15. The fixed axis C is arranged so that the edge 15 moves down and vice versa when an operator O moves the grip 14 downwards. In particular, this is obtained by means of the upward action of the appendix 23 on the guide 22 and vice versa.

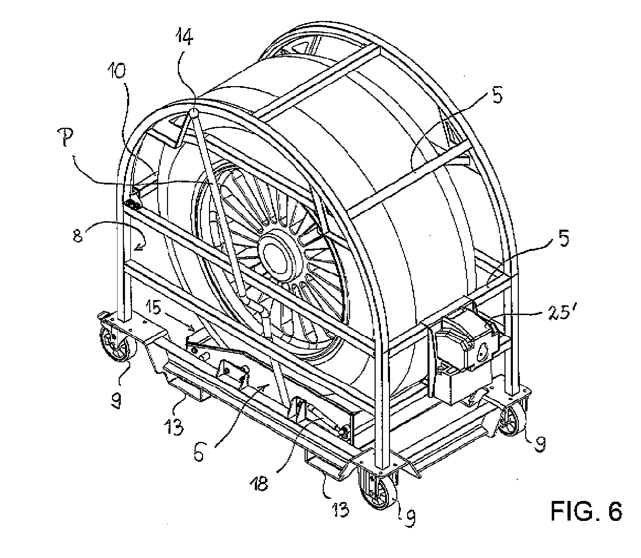

Figure 6 shows a perspective view of the trolley 1 which highlights the presence of a motorized winch 25' arranged on the opposite part of the opening 8 to the seat 7. A battery may be present aboard the trolley 1 to power the motorized winch 25'.

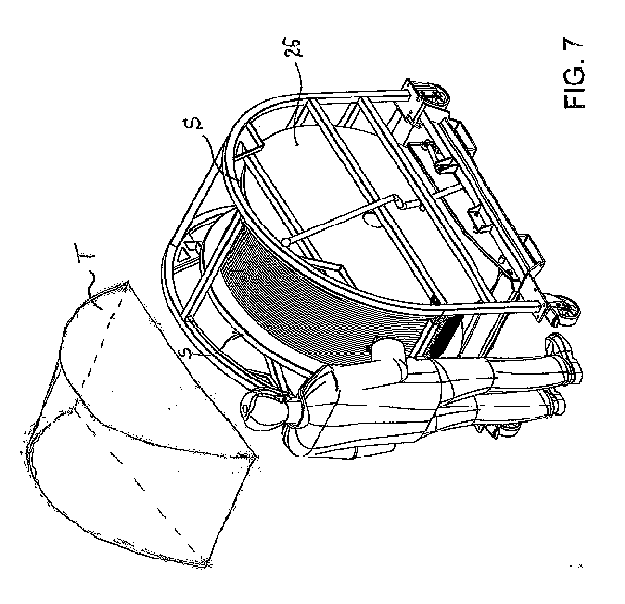

Figure 7 shows the use of the trolley 1 for a cable reel 26 which, with respect to the wheel 2, has a rolling surface S shaped to provide greater stability during rolling. This is unlike wheel 2, which instead has a rolling surface S having a reduced width arranged in the immediate proximity of a middle plane P1 of the wheel itself. Furthermore, having a tapered or curved transverse profile of the rolling surface, the stability of the wheel 2 is lower than that of the reel 26 during rolling.

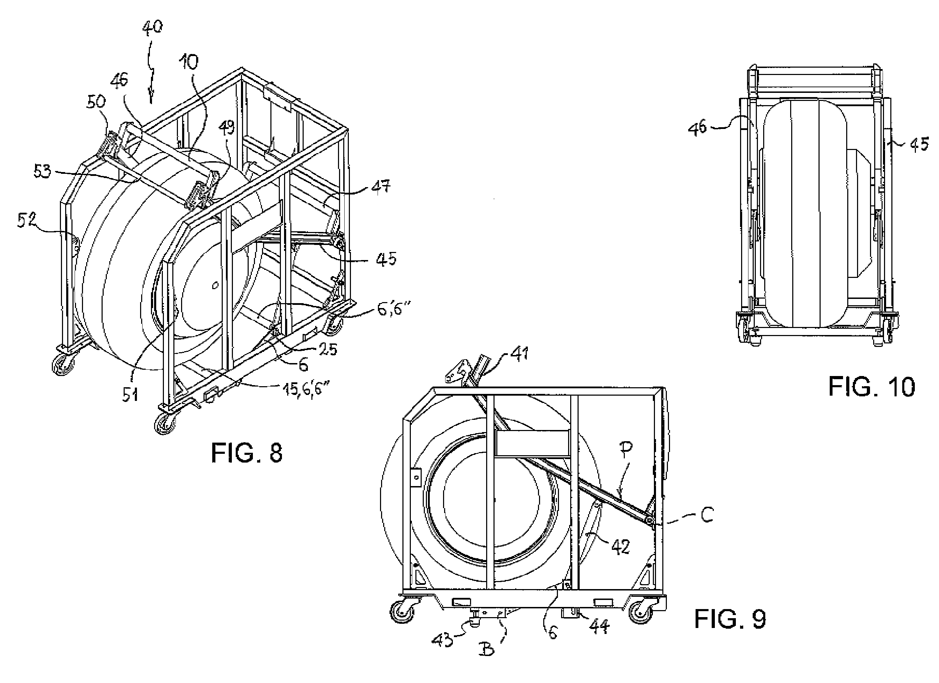

Figure 8 shows a second embodiment of the present invention in which only the differences with respect to the embodiment shown in figures 1-7 are described for the sake of simplicity.

In particular, figure 8 shows a trolley 40 in which the closure 10 is carried by the extension P so that with a single downward movement the extension P controls both the movement of the support 6 towards the storage position and the descent of the closure 10 to the locking position. In order to obtain such an effect, the articulated mechanism to connect the extension P to the supporting element 6 must be configured to allow an adequate stroke of a front end 41 of the extension P. Indeed, when the extension P is raised, the closure 10 must be in a vertical position such to allow loading the wheel 2 and when the extension P is lowered, the closure 10 must close the opening 8 to lock the exiting of the wheel 2. For this purpose, the hinge axis C is fixed on the trolley 40 at a very retroceded vertical position, higher than that of the hinge axis B. Furthermore, an arm 42 is arranged between the extension P and the support 6 to define a control mechanism of the angular position of the support 6 about the axis B.

In the embodiment shown in figures 8-10, the brake 20 comprises a moveable block 43 with the support 6. The block 43, unlike the block 21, is not loaded at least partially by the weight of the wheel 2 when it is in the lowered position in contact with the ground. In order to prevent the trolley from "escaping" while the wheel 2 is loaded rolling on, the block 43 is maintained in contact with the terrain by means of the control mechanism operated by the extension P. Also in this case, the block 43 is maintained against the terrain by a load applied by a compensating spring (not shown) having identical function to that of the compensating spring 18.

For greater safety, the support 6 is guided to perform an arc of circumference shaped trajectory by a guide 44.

According to a preferred embodiment of the present invention, the extension P is a complex structure comprising a first and a second bars 45, 46 connected to each other by a moveable crosspiece 47 opposite to the opening 8 with respect to the hinge axis B so that the wheel 2 can rest on the moveable crosspiece 47 in the storage position. In frontal position, the bars 45, 46 are connected to each other by the closure 10 and carry respective couplings 49, 50, which can be connected in releasable manner to respective strikers 51, 52 when the closure 10 is in the locking position. Preferably, the couplings 49, 50 are activated by a transverse handle 53 arranged on side opposite to the hinge axis C with respect to the closure 10 so that, in the locking position, the closure 10 protects the transverse handle 53 from the wheel 2.

The edge 15 of the trolley 40 is fixed and arranged at a lowered position such that the wheel 2 can climb rolling onto the support 6 pushed by the operator O. For example, the distance of the edge 15 from the ground, when the edge is fixed, is comprised between 60 and 150mm, accordingly to the diameter of the wheel 2 for which the trolley 1 is designed. Furthermore, according to the embodiment shown in figures 8-10, the support 6 is hinged about the edge 15 and the end portion 25 reaches a vertical height which is higher than that of the edge 15 when the support 6 is in the loading/unloading position. Such a position is reached along the guide 44, which defines a stop for the loading/unloading position (for example shown in figure 9) and a stop for the storage position.

The advantages which can be obtained by means of the trolley 1, 40 according to the present invention are the following.

The edge 15 of the trolley 1, 40 allows to load the wheel 2 by rolling and by pushing by an operator. When the wheel 2 is aboard the trolley 1, 40, the transportation and logistics management thereof are extremely easy.

It is finally apparent that changes and variations can be made to the trolley 1, 40 described and illustrated herein without because of this departing from the scope of protection defined by the appended claims.

The trolley 1, 40 may comprise a releasable connection to be coupled to a towed trailer and/or to a towing vehicle so as to be able to move several trolleys at the same time.

Furthermore, the trolley 1, 40 can be equipped with an either rigid or flexible cap T (figure 7) to be fitted on the wheel 2 and/or at least on the upper portion of the trolley, often to protect at least partially the trolley 1, 40 and the wheel 2, e.g. from weather elements, including UV rays, and to allow storing the wheel 2 also outdoors.

The bars or walls 6' may be provided with idle rollers 6" on which the wheel 2 may be turned by hand to avoid the ovalization thereof.

The edge 15 may also come directly into contact with the terrain in the loading/unloading position to simplify such operations even further.

The closure 10 may also be hinged, e.g. swinging.

The extension P may be absent from the most economical versions of the trolley 1 and, in this case, the support 6 is lowered by a pressure of the foot and follows the movement of the wheel 2 to reach the storage position.

The wheels 9 may be adapted for use on gravel or on unpaved surfaces, e.g. when the trolley 1 is associated with wheels of agricultural vehicles.

Instead of or in combination with the compensating spring 18, the trolley may also comprise a damper to dissipate further amounts of energy when the support 6 reaches the storage position and avoid sudden movements of the trolley when the brake 20 is deactivated.

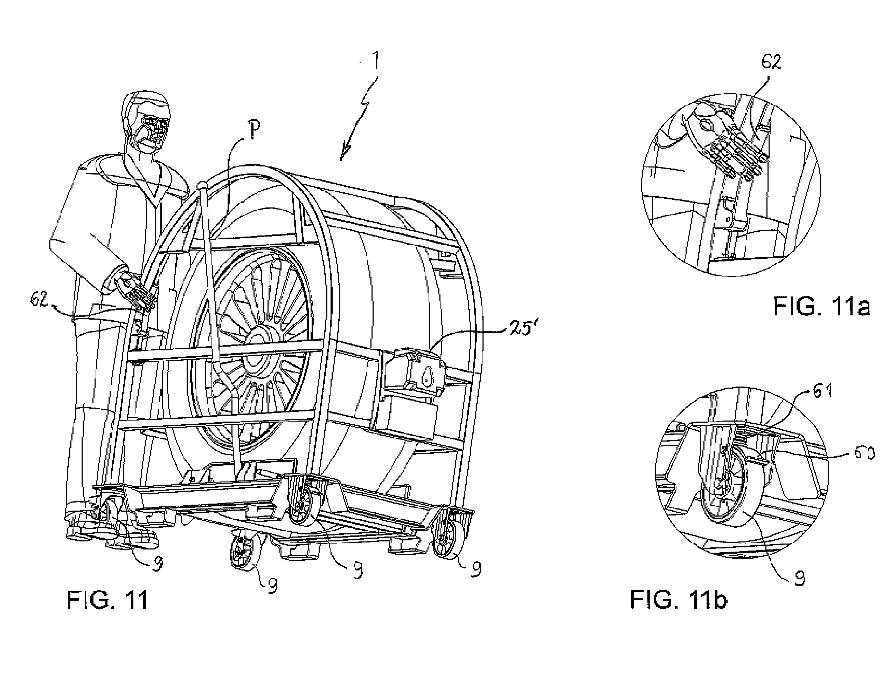

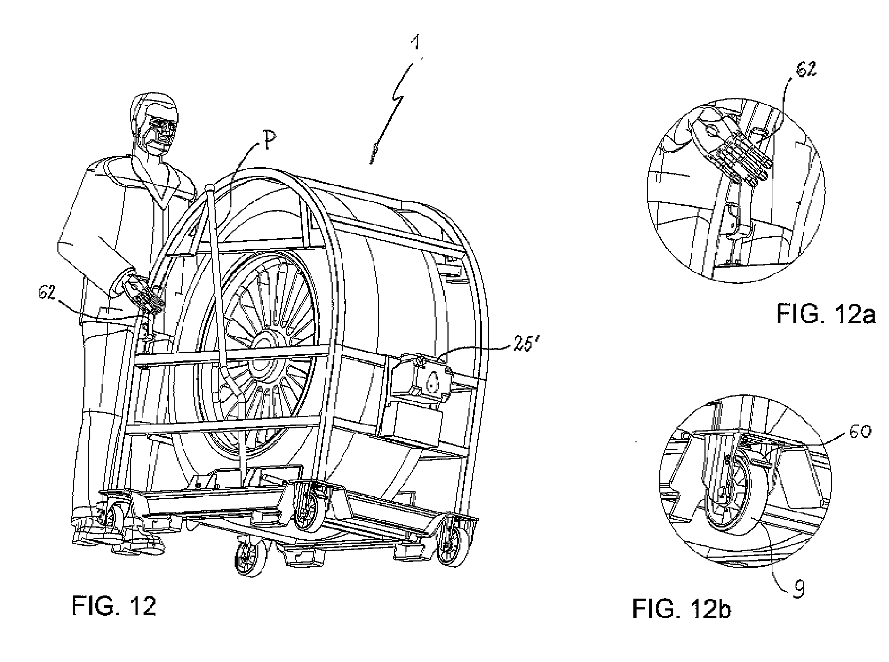

Figures 11 and 12 show an alternative embodiment of the brake 19. In particular, such a brake is maintained by means of a spring in the coupling position to brake the trolley 1, in particular the wheels 9. In figure 11b, a pad 60 of the brake 19 is pressed onto a wheel 9 by means of a spring 61. In this manner, the trolley 1 is normally braked to allow the trolley 1 to remain in a fixed position even when it is loaded, e.g. when the terrain is sloped.

To deactivate the brake 19, the operator 0 activates a lever 62 (figure 12a) which deactivates the brake 19 against the bias of the spring. Preferably, the lever 62 is arranged in a frontal position of the trolley 1 and/or can be activated by hand by the operator 0. The lever 62 is part of a grip of the trolley 1 so that, when the operator O moves the trolley 1, the hands of the operator O gripping the trolley 1 for the movement may easily maintain the lever 62 activated so as to deactivate the brake 19.

## Claims

1. A trolley for a rolling disk body (2) comprising a support (6) for maintaining the rolling body (2) raised off the ground against the action of the weight of the rolling body (2), and adapted to come into contact with a rolling surface (S) of said rolling body, a first and a second side (3, 4) opposed in transverse direction to said support (6) and spaced apart to define a loading opening (8) for said rolling body (2) and a seat (7) defined between said support (6) and said first and second side (3, 4) to house said rolling body (2) in a position such that lateral faces (F) of the rolling body (2) are facing a respective side (3, 4), said trolley (1) comprising a transverse edge (15) adapted to come into contact with said rolling surface (S), while said rolling body (2) enters said seat (7) and having a distance from the ground that is null or such that said rolling body (2) can be rolled onto said support (6) by pushing, wherein said support (6) is movable between a loading/unloading position in which said rolling body is rolled onto/off said trolley and a storage position in which said rolling body (2) is housed stably in said seat (7), wherein said transverse edge (15) is movable with said support (6) between a lowered position for loading/unloading of said rolling body (2) and a raised position and comprising a braking system (19; 20) to block said trolley,
**characterized in that** the braking system comprises a block (21; 43) connected to said support (6) by means of a mechanism and movable to come into contact with the ground when said support (6) is in the loading/unloading position.

2. A trolley according to claim 1, **characterized in that** said block (21) is configured to be loaded against the ground by the weight of said rolling body (2) when the rolling body (2) is loaded/unloaded.

3. A trolley according to any one of claims 1 and/or 2, **characterized in that** the braking system comprises a brake (19) maintained in the braking position through a spring.

4. A trolley according to claims 1 and 3, **characterized in that** said block (21; 43) and said brake (19) can be activated independently.

5. A trolley according to any one of claims 3 to 4, **characterized in that** said brake (19) can be deactivated by means of a lever (62) arranged to be gripped during movement of the trolley.

6. A trolley according to any one of the preceding claims, **characterized in that** it comprises a compensating spring (18) loaded to slow down said support (6) while reaching said loading/unloading position, **and in that** said compensating spring (18) applies a load to said block (21) to brake said trolley when said support (6) is in the loading/unloading position.

7. A trolley according to any one of the preceding claims, **characterized in that** it comprises a motorized winch (25').

8. A trolley according to any one of the preceding claims, **characterized in that** said support (6) comprises idle rollers (6'').

9. A trolley according to any one of the preceding claims, **characterized in that** it comprises a pair of slots (13) adapted to couple with a fork of a forklift truck.

10. A trolley according to any one of the preceding claims, **characterized in that** said seat (7) is sized to house respectively a wheel of an aircraft, a truck, a semi-articulated vehicle or of an earth-moving machine or of an agricultural machine or a reel having a minimum diameter exceeding 300 millimeters and a minimum weight exceeding 40 kg.

11. A trolley according to any one of the preceding claims, **characterized in that** said support (6) defines a cavity (M) into which a portion of said rolling body (2) falls when it is housed in said seat (7).

12. A unit comprising a trolley according to any one of the preceding claims and a covering cap (T) mounted on the trolley to protect said rolling body.
